# DEMANDE DE BREVET EUROPEEN

(11) **EP 0 836 258 A1**
(43) Date de publication de la demande: **15.04.1998**
(21) Numéro de dépôt: 97402399.6
(22) Date de dépôt: 13.10.1997
(51) Int. Cl.: H02B 13/065

(54) **Dispositif de surveillance pour un câble à isolation gazeuse**

(30) Priorité: 14.10.1996 FR 9612488
(71) Demandeur: GEC ALSTHOM T ET D SA, 75116 Paris (FR)
(72) Inventeur: Pham, Van Doan, 69330 Meyzieu (FR)
(74) Mandataire: Fournier, Michel

(57) **Abrégé**

l'invention concerne un dispositif de surveillance pour un câble à isolation gazeuse comprenant une pluralité de tronçons (T2, T3,...) séparés par des cloisons étanche (C2, C3, ...), chaque tronçon comprenant une enveloppe d'acier cylindrique (E), un écran d'aluminium cylindrique (AL), coaxial et intérieur à ladite enveloppe, et trois conducteurs, ledit dispositif capteur comprenant , disposées entre l'enveloppe (E) et l'écran (AL), des fibres optiques (FO2, FO3,..) en nombre égal à celui des tronçons du câble et s'étendant d'une extrémité à l'autre du câble, chacun desdits tronçons étant surveillé par une seule fibre, au moins un détecteur optique d'arc interne inséré en série dans chaque fibre au niveau du tronçon surveillé correspondant, et, à chaque extrémité du dispositif, des moyens (P1, P2) d'enregistrement de la lumière convoyée par les fibres optiques, selon l'invention, au moins un détecteur optique de température seuil, est inséré en série dans chaque fibre au niveau du tronçon surveillé correspondant.

## Description

La présente invention concerne un dispositif de surveillance pour un câble à isolation gazeuse. Plus particulièrement la présente invention concerne un dispositif pour détecter et localiser un arc interne, et constater le dépassement d'une valeur seuil de température dans un câble électrique à isolation gazeuse.

Un tel câble électrique a été décrit notamment dans la demande de brevet français n° 93 15 355 déposée le 21 décembre 1993 au nom de GEC ALSTHOM T&D SA.

Il comprend une enveloppe extérieure cylindrique étanche en acier dans laquelle trois conducteurs de phase sont disposés parallèlement à l'axe de l'enveloppe. Une enveloppe en aluminium est intercalée entre les conducteurs et l'enveloppe en acier, très près de cette dernière, et constitue un écran magnétique permettant de réduire l'échauffement de l'enveloppe en acier. Il est indiqué que le câble est constitué de plusieurs tronçons, un tronçon étant constitué par le soudage bout à bout sur le site d'éléments de câbles montés en usine. Chaque élément de câble comprend un élément d'enveloppe en acier, un élément d'enveloppe en aluminium et trois conducteurs maintenus par des bras isolants; un tel élément de câble a une longueur de dix mètres environ, un tronçon, constitué d'une dizaine d'éléments, ayant une longueur de cent mètres environ. Le câble est rempli de gaz isolant, tel que l'azote sous pression. Le document indique également que deux tronçons adjacents sont séparés par une cloison assurant notamment l'étanchéité entre les deux tronçons.

Un dispositif de détection d'arc interne pour un tel câble électrique à isolation gazeuse a été décrit dans la demande de brevet française n°96 01 131.

Le dispositif de détection d'arc interne pour un câble à isolation gazeuse comprend, disposées entre l'enveloppe et l'écran, des fibres optiques en nombre égal à celui des tronçons du câble et s'étendant d'une extrémité à l'autre du câble, chacun desdits tronçons étant surveillé par une seule fibre, la fibre affectée à la surveillance d'un tronçon comportant, dans ce tronçon, un capteur de lumière inséré en série dans la fibre, le dispositif comprenant, à chaque extrémité, des moyens d'enregistrement de la lumière convoyée par les fibres optiques en cas d'arc interne dans un tronçon.

Un autre paramètre important à détecter est la température des tronçons. En effet, cette température est fonction croissante des pertes joules dans le tronçon. La détection d'une température au-dessus d'une température seuil prédéterminée peut avoir pour origine des pertes Joules anormalement élevées dues à de mauvais contacts ou de mauvaises soudures dans le tronçon considéré.

Un but de la présente invention est de concevoir un dispositif de surveillance permettant de détecter et localiser un arc interne même de faible intensité, et le dépassement d'une température seuil à l'aide d'une seule fibre.

A cet effet l'invention concerne un dispositif de surveillance pour un câble à isolation gazeuse comprenant une pluralité de tronçons séparés par des cloisons étanches, chaque tronçon comprenant une enveloppe d'acier cylindrique, un écran d'aluminium cylindrique, coaxial et intérieur à ladite enveloppe, et trois conducteurs, ledit dispositif capteur comprenant, disposées entre l'enveloppe et l'écran, des fibres optiques en nombre égal à celui des tronçons du câble et s'étendant d'une extrémité à l'autre du câble, chacun desdits tronçons étant surveillé par une seule fibre, au moins un détecteur optique d'arc interne inséré en série dans chaque fibre au niveau du tronçon surveillé correspondant, et, à chaque extrémité du dispositif, des moyens d'enregistrement de la lumière convoyée par les fibres optiques. Selon l'invention, le dispositif de surveillance comprend en outre au moins un détecteur optique de température seuil, inséré en série dans chaque fibre au niveau du tronçon surveillé correspondant.

Un autre but de la présente invention est de proposer un détecteur optique d'arc interne amélioré.

A cet effet le détecteur optique d'arc interne comprend un élément de fibre optique en silice dénudée monté en série sur la fibre optique de surveillance, formant un enroulement autour d'un tube de verre mince et transparent, l'enroulement et le tube étant disposé à intérieur de l'espace défini par l'écran cylindrique.

Le détecteur optique d'arc interne comprend avantageusement une surface réfléchissante disposée coaxialement dans le tube de verre mince et transparent.

En outre, le détecteur optique d'arc interne peut comprendre une surface réfléchissante en demi cylindre, disposée, coaxialement et extérieurement, à proximité du tube de verre mince et transparent et de l'enroulement.

Enfin l'invention concerne un détecteur optique de dépassement de température seuil qui comprend un premier élément de fibre optique monté en série sur la fibre optique de surveillance amont, et un deuxième élément de fibre optique monté en série sur la fibre optique de surveillance aval, chaque élément de fibre optique comprenant une face transversale libre polie;
des moyens de guidage pour maintenir les faces transversales libres polies en regard et parallèles l'une à l'autre tout en autorisant un mouvement relatif axial d'un élément de fibre par rapport à l'autre;
un premier moyen élastique pour forcer le contact des faces transversales polies;
un second moyen élastique s'opposant au premier moyen élastique;
au moins un des premier ou deuxième moyens élastiques ayant une raideur variable en fonction de la température, lesdites raideurs étant étalonnées pour que,
au-dessus d'une température seuil prédéterminée du premier et/ou du deuxième moyen élastique, la résultante des forces Rf écarte les faces transversales polies l'une de l'autre, et
au-dessous de la température seuil prédéterminée du premier et/ou du deuxième moyen élastique, la résultante des forces Rf mette en contact mécanique les faces transversales polies.

Dans un mode de réalisation le détecteur optique de température de seuil comprend un piston solidarisé à l'un des éléments de fibre optique, se déplaçant axialement dans une enceinte axiale entourant les deux faces transversales polies, solidarisée à l'autre des éléments de fibre optique, ledit piston étant soumis à la résultante des raideurs.

Les premier et second moyens élastique sont avantageusement un premier et un deuxième ressorts travaillant en opposition entre le piston et l'enceinte.

Avantageusement les moyens de guidage du détecteur optique de température de seuil comprennent un tube de diamètre intérieur égal au diamètre des éléments de fibre optique, solidarisé coaxialement et prolongeant l'un des éléments de fibre, l'autre élément de fibre étant libre en translation axiale dans le tube.

D'autres avantages et caractéristiques de la présente invention résulterons de la description qui va suivre en référence aux dessins annexés dans lesquels :
- la figure 1 est une représentation schématique d'un câble électrique à isolation gazeuse à tronçons selon l'invention;
- la figure 2 est une représentation schématique d'un dispositif de surveillance pour un câble à isolation gazeuse selon l'invention.
- la figure 3 est une représentation schématique de détail de réalisation du détecteur optique d'arc interne selon l'invention;
- la figure 4 est une représentation schématique de détail de réalisation du détecteur optique de température de seuil selon l'invention;

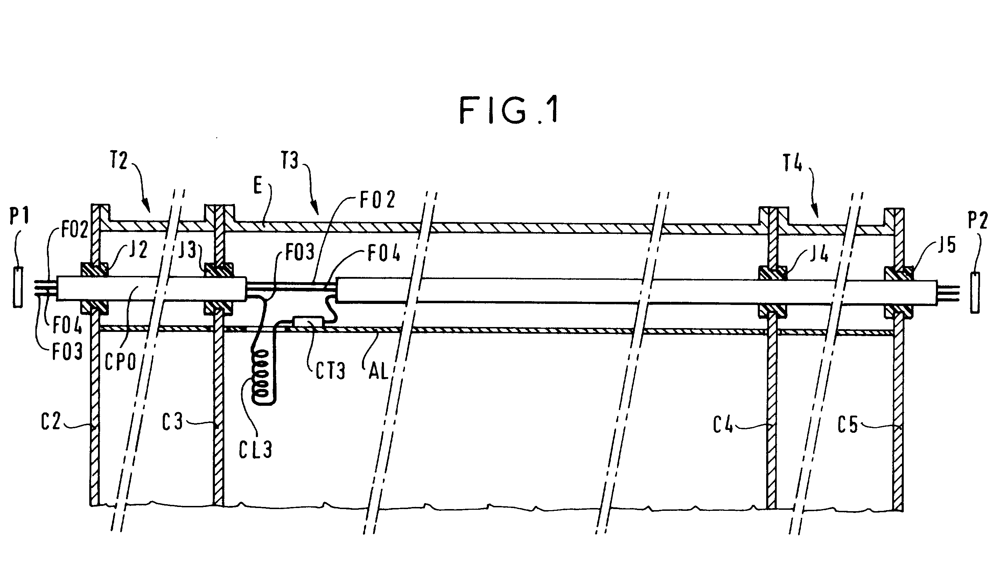

La figure 1 représente schématiquement un câble électrique à isolation gazeuse à trois tronçons T2 à T4. On n'a représenté, pour la clarté du dessin, que l'enveloppe extérieure E des tronçons, l'écran d'aluminium AL, et les cloisons C2 à C5 délimitant les différents tronçons.

La détection est faite au moyen de fibres optiques, en nombre égal au nombre des tronçons et qui s'étendent d'une extrémité à l'autre du câble électrique.

Chaque fibre optique est affectée à la surveillance d'un tronçon déterminé.

La fibre affectée à la surveillance d'un tronçon donné est associée à au moins un détecteur d'arc interne et au moins un détecteur de température de seuil qui seront définis plus loin.

A au moins une extrémité des fibres F02 à F04, est placé un élément d'enregistrement de lumière P1, P2, tel qu'une plaque ou un papier photographique sensible à la lumière transmise par la fibre approprié, ou un convertisseur opto-électrique ou équivalent. De préférence des éléments d'enregistrement de lumière P1 et P2 seront placés à chacune des extrémités des fibres optiques, très près de celles-ci, comme le montre la Fig.1.

On distingue dans la Fig.1, le tronçon T3, adjacent aux tronçons T2 et T4 et séparé de ces derniers respectivement par les cloisons étanches C3 et C4.

Les fibres sont disposées dans l'espace compris entre l'enveloppe extérieure E en acier du câble électrique et l'écran AL en aluminium.

Les fibres sont disposées dans une gaine commune, en matériau isolant de bonne tenue à l'arc, tel que le Téflon,. Le câble optique COP ainsi formé s'étend d'un bout à l'autre du câble électrique, en traversant les cloisons de manière étanche, par exemple grâce à des joints J2, ..., J3 etc... Les joints sont de préférence en matériau thermorétractable. En effet, pour faciliter le tirage du câble optique à travers les cloisons, il y a intérêt à avoir des joints présentant un jeu suffisant. On assure les étanchéités après mise en place du câble optique par chauffage des joints thermorétractables.

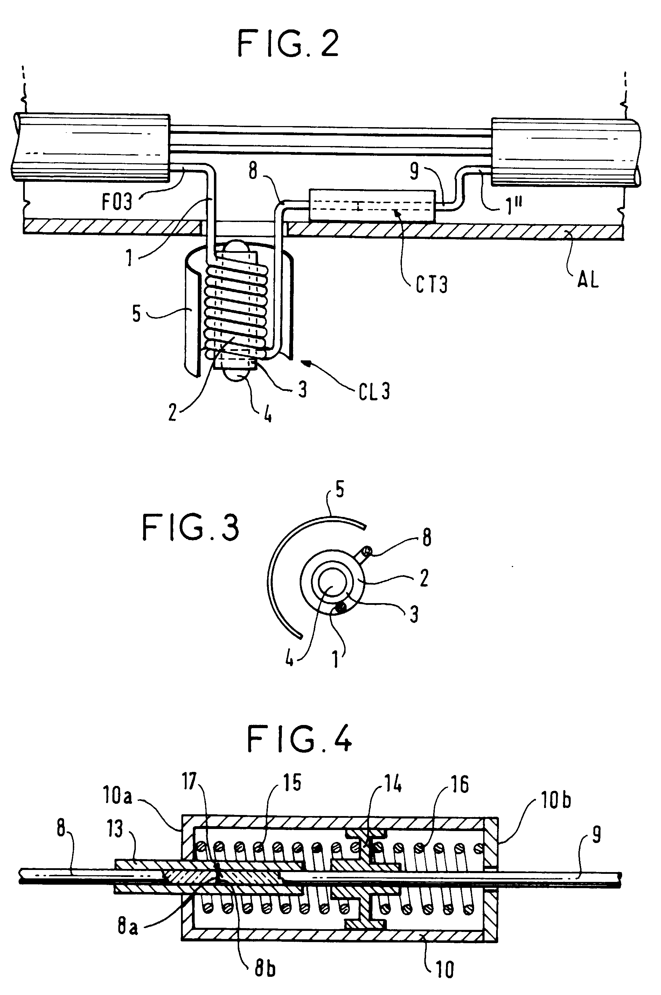

Le Dispositif de surveillance, pour chacun des tronçons, est réalisé comme suit (cf fig. 2).

Le câble optique est dénudé au voisinage d'une des extrémités du tronçon, par exemple au voisinage de la cloison C3 sur une courte portion (10 à 50 centimètres par exemple), et la fibre optique F03 affectée à la surveillance du tronçon T3 est coupée à cet endroit définissant une extrémité amont 1 et une extrémité aval 1". L'extrémité amont 1 de cette fibre est reliée, par un connecteur à un détecteur optique d'arc interne CL3. Entre l'extrémité du détecteur optique d'arc interne CL3, opposée à l'extrémité 1 de la fibre optique de surveillance F03 et l'extrémité aval 1", est monté, en série, un détecteur optique de température de seuil CT3.

Dans une forme de réalisation représentée sur les figures 2 et 3, le détecteur optique d'arc interne CL3 comprend un élément de fibre optique 2 en silice dénudée, monté en série sur l'extrémité 1 de la fibre optique de surveillance F03 formant un enroulement 2 autour d'un tube de verre mince et transparent 3. L'enroulement 2 et le tube étant disposé à intérieur de l'espace défini par l'écran cylindrique (AL) de manière à capter la lumière des arcs internes (cf. figures 2 et 3).

Dans un mode de réalisation et pour amplifier la lumière, le détecteur optique d'arc interne CL3 comprend une surface réfléchissante 4 disposée coaxialement dans le tube de verre mince et transparent 3. Cette surface 4 peut être par exemple une tige d'aluminium polie de diamètre égal au diamètre intérieur du tube ou un film réfléchissant déposé sur la face interne du tube.

Pour les mêmes raisons d'amplification de la lumière, le détecteur optique d'arc interne CL3 peut comprendre une surface réfléchissante 5 en demi cylindre disposée coaxialement à proximité du tube de verre mince et transparent 3 et de l'enroulement 2.

A l'extrémité de l'enroulement 2, opposée l'extrémité 1 de la fibre optique de surveillance F03, est monté, en série, un détecteur optique de température de seuil CT3.

Dans une forme de réalisation le détecteur optique de température de seuil CT3 comprend un premier élément de fibre optique 8 monté en série sur l'enroulement 2 du détecteur optique d'arc interne CL3, et un deuxième élément de fibre optique 9 monté en série sur l'extrémité aval 1" de la fibre optique de surveillance F03. Chaque élément de fibre optique 8, 9 comprenant une face transversale libre polie 8a, 9a.

Le détecteur optique de température de seuil CT3 comprend des moyens de guidage 10, 14, 13 pour maintenir les faces transversales libres polies 8a, 9a, coaxiale, en regard et parallèles l'une à l'autre tout en autorisant un mouvement relatif axial d'un élément de fibre 8, 9 par rapport à l'autre 9, 8.

Le détecteur de température de seuil comprend en outre un premier moyen élastique 16 pour forcer le contact mécanique 17 des faces transversales polies 8a, 9a; et

un second moyen élastique 15 s'opposant au premier moyen élastique 16.

Au moins un des premier 16 ou deuxième 15 moyens élastiques a une raideur variable en fonction de la température, les raideurs, variables ou constantes, étant étalonnées pour que,
au-dessus d'une température seuil Ts prédéterminée du premier 16 et/ou du deuxième 15 moyen élastique, la résultante des forces Rf écarte les faces transversales polies l'une de l'autre, et
au-dessous de la température seuil prédéterminée du premier et/ou du deuxième moyen élastique, la résultante des forces Rf mette en contact des faces transversales polies.

Dans un mode de réalisation de l'invention, le détecteur optique de température de seuil comprend un piston 14 solidarisé à l'élément de fibre optique aval 9, se déplaçant axialement dans une enceinte axiale 10 entourant les deux faces transversales polies 8a, 9a.

Le piston 14 et l'enceinte axiale 10 constituent une partie des moyens de guidage de l'élément de fibre optique aval.

L'enceinte axiale 10 est solidarisée à l'élément de fibre optique amont 8.

La face transversale libre polie 8a de l'élément de fibre optique amont 8 est prolongée coaxialement par et solidarisée à un tube 13 de diamètre intérieur égal au diamètre des éléments de fibre optique 8, 9, l'élément de fibre aval 9 étant libre en translation axiale dans le tube 13. Le tube 13 constitue une autre partie des moyens de guidage du détecteur, et en combinaison avec l'ensemble piston 14 / enceinte 10 permet d'assurer une bonne coaxialité des faces transversales libres polies en regard 8a, 9a tout en permettant un mouvement axial relatif des éléments de fibre 9, 8.

Le piston 14 est soumis à la résultante des forces Rf. Dans le mode de réalisation représenté sur les figures, les premier 16 et second 15 moyens élastiques sont respectivement un premier 16 et un deuxième 15 ressorts travaillant en opposition entre le piston 14 et l'enceinte 10.

Sur la figure 4 l'enceinte 10 comprend une base transversale amont 10a et une base transversale aval 10b percées pour le passage respectivement de l'élément de fibre amont 8, et l'élément de fibre amont 9. La base transversale aval 10b permet le passage libre de l'élément de fibre aval 9, la base transversale amont 10a étant solidarisée au tube de guidage 13. En outre le premier 16 et le deuxième 15 ressorts sont en compression respectivement entre la base transversale amont 10a et le piston 14 et entre la base transversale aval 10b et le piston 14.

L'un et/ou l'autre des ressorts 16, 15 ont une raideur variable avec la température. Par exemple les ressorts 16, 15 peuvent être réalisés en matériaux à mémoire de forme.

Dans le mode de réalisation proposé, le premier ressort 16 est un ressort en matériau normal, et le second ressort est un ressort en matériau à mémoire de forme de telle manière que
jusqu'à la température seuil Ts prédéterminée, par exemple 90°C, le second ressort a une première forme induisant une résultante des forces Rf mettant en contact des faces transversales polies 8a, 9a, et
à la température seuil Ts prédéterminée le second ressort prend une seconde forme induisant une résultante des forces Rf écartant fortement les faces transversales polies 8a, 9a l'une de l'autre. On entend par "fortement" un écart entre les faces transversales qui affecte sensiblement la transmission de la lumière.

L'enceinte 10 du détecteur de dépassement de température de seuil Ts est disposé au contact thermique de l'écran AL.

Le principe de fonctionnement du dispositif de surveillance selon l'invention est le suivant :
pour un tronçon donné, le détecteur d'arc étant placé en amont du détecteur de dépassement de température de seuil, la lumière émise par un arc interne est captée par l'enroulement 2. Avantageusement le diamètre intérieur de l'enroulement est de 8 à 10 mm ce qui permet de donner un rayon de courbure adéquate à la fibre pour que les rayons lumineux venant frapper tangentiellement l'enroulement pénètre la fibre. La lumière captée est convoyée par la fibre jusqu'aux éléments d'enregistrement de la lumière.

Lorsque la température du détecteur de température seuil est en dessous de la température seuil, les faces transversales libres polies en regard 8a, 9a sont au contact mécanique sous l'action de la résultante des forces Rf. De ce fait, la liaison optique entre les éléments de fibre amont 8 et aval 9 est optimal et l'élément d'enregistrement de la lumière amont recevra la même énergie lumineuse que l'élément d'enregistrement de la lumière aval.

Lorsque la température du détecteur de température seuil est au-dessus de la température seuil, les faces transversales libres polies en regard 8a, 9a sont toujours coaxiales mais écartées l'une de l'autre sous l'action de la résultante des raideurs. De ce fait la liaison optique est sensiblement affectée par l'air existant entre les faces transversales libres polies en regard 8a, 9a. l'élément d'enregistrement de la lumière amont recevra sans atténuation énergie lumineuse captée par le détecteur d'arc alors que l'élément d'enregistrement de la lumière aval n'en recevra qu'une partie du fait de l'atténuation générée par l'air entre les faces transversales libres polies en regard 8a, 9a.

Dans un mode de réalisation non représenté, on pourra prévoir une source lumineuse commandable, a proximité du détecteur de lumière. Cette source commandable permettrait de déterminer si la température de seuil est dépassée indépendamment de l'existence d'un arc électrique.

La source lumineuse serait activée à volonté pendant le temps nécessaire et la comparaison des énergies lumineuses reçues par les éléments d'enregistrement de la lumière aval et amont permettrait sans présence d'arc électrique de déterminer si la température seuil est dépassée ou non.

Dans un autre mode de réalisation, on pourra, à intervalle choisi ou lorsque l'on détecte une anomalie de fonctionnement, substituer l'un des enregistreurs de lumière P1, P2 par une source lumineuse, et observer quelles sont les fibres optiques FO2...FO4 qui ne transmettent pas la lumière jusqu'à l'enregistreur P2, P1 resté en place. On pourra alors en déduire logiquement le tronçon dont la température a dépassée la température seuil Ts prédéterminée.

Bien entendu, l'invention n'est pas limitée au mode de mise en oeuvre ou de réalisation décrit et représenté, mais elle est susceptible de nombreuses variantes accessibles à l'homme du métier sans que l'on s'écarte de l'invention. En particulier, le nombre de détecteurs par tronçon peut être doublé ou triplé par sécurité sans sortir du cadre de l'invention. De même les positions relatives des détecteurs peuvent varier sans sortir du cadre de l'invention.

## Revendications

1. Dispositif de surveillance pour un câble à isolation gazeuse comprenant une pluralité de tronçons (T2, T3,...) séparés par des cloisons étanche (C2, C3, ...), chaque tronçon comprenant une enveloppe d'acier cylindrique (E), un écran d'aluminium cylindrique (AL), coaxial et intérieur à ladite enveloppe, et trois conducteurs, ledit dispositif capteur comprenant , disposées entre l'enveloppe (E) et l'écran (AL), des fibres optiques (FO2, FO3,..) en nombre égal à celui des tronçons du câble et s'étendant d'une extrémité à l'autre du câble, chacun desdits tronçons étant surveillé par une seule fibre, au moins un détecteur optique d'arc interne inséré en série dans chaque fibre au niveau du tronçon surveillé correspondant, et, à chaque extrémité du dispositif, des moyens (P1, P2) d'enregistrement de la lumière convoyée par les fibres optiques, caractérisé en ce qu'il comprend en outre au moins un détecteur optique de température seuil, inséré en série dans chaque fibre au niveau du tronçon surveillé correspondant.

2. Dispositif de surveillance selon la revendication 1 caractérisé en ce que le détecteur optique d'arc interne (CL3) comprend un élément de fibre optique en silice dénudé (2) monté en série sur la fibre optique de surveillance (F03), formant un enroulement (2) autour d'un tube de verre mince et transparent (3) , l'enroulement (2) et le tube (3) étant disposé à l'intérieur de l'espace défini par l'écran cylindrique (AL).

3. Dispositif de surveillance selon la revendication 2 caractérisé en ce que le détecteur optique d'arc interne (CL3) comprend une surface réfléchissante (4) disposée coaxialement dans le tube de verre mince et transparent (3).

4. Dispositif de surveillance selon la revendication 2 ou 3 caractérisé en ce que le détecteur optique d'arc interne (CL3) comprend une surface réfléchissante (5) en demi cylindre disposée coaxialement autour de l'enroulement (2).

5. Dispositif de surveillance selon l'une quelconque des revendications 1 à 4 caractérisé en ce que le détecteur optique de température de seuil Ts (CT3) comprend un premier élément de fibre optique (8) monté en série sur la fibre optique de surveillance amont(FO3, 1), et un deuxième élément de fibre optique (9) monté en série sur la fibre optique de surveillance aval (FO3, 1"), chaque élément de fibre optique (8, 9) comprenant une face transversale libre polie (8a, 9a);
des moyens de guidage (10, 13, 14) pour maintenir les faces transversales libres polies (8a, 9a) en regard et parallèles l'une à l'autre tout en autorisant un mouvement relatif axial d'un élément de fibre (8, 9) par rapport à l'autre (9, 8);
un premier moyen élastique (16) pour forcer le contact des faces transversales polies (8a, 9a);
un second moyen élastique (15) s'opposant au premier moyen élastique (16);
au moins un des premier (16) ou deuxième (15) moyens élastiques ayant une raideur variable en fonction de la température, les raideurs étant étalonnées pour que,
Au-dessus d'une température seuil Ts prédéterminée du premier (16) et/ou du deuxième (15) moyen élastique, la résultante des forces Rf écarte les faces transversales polies (8a, 9a) l'une de l'autre, et
Au-dessous de la température seuil Ts prédéterminée du premier (16) et/ou du deuxième (15) moyen élastique, la résultante des forces Rf mette en contact des faces transversales polies (8a, 9a).

6. Dispositif de surveillance selon la revendication 5 caractérisé en ce que
le détecteur optique de température de seuil Ts (CT3) comprend un piston (14) solidarisé à l'un (9) des éléments de fibre optique, se déplaçant axialement dans une enceinte axiale (10, 10a, 10b) entourant les deux faces transversales polies (8a, 9a), solidarisée à l'autre (8) des éléments de fibre optique, ledit piston (14) étant soumis à la résultante des forces Rf.

7. Dispositif de surveillance selon la revendication 6 caractérisé en ce que les premier (16) et second (15) moyens élastiques sont respectivement un premier (16) et un deuxième (15) ressorts travaillant en opposition entre le piston (14) et l'enceinte (10, 10a, 10b).

8. Dispositif de surveillance selon la revendication 7 caractérisé en ce que le second ressort (15) est en matériau à mémoire de forme de telle manière que
jusqu'à la température seuil Ts prédéterminée le second ressort a une première forme induisant une résultante des forces Rf mettant en contact des faces transversales polies (8a, 9a), et
à la température seuil Ts prédéterminée le second ressort à une seconde forme induisant une résultante des forces Rf écartant fortement les faces transversales polies (8a, 9a) l'une de l'autre.

9. Dispositif de surveillance selon la revendication 6 ou 7 caractérisé en ce que les moyens de guidage (10, 13, 14) du détecteur optique de température de seuil Ts (CT3) comprennent un tube (13) de diamètre intérieur égal au diamètre des éléments de fibre optique (8, 9), solidarisé coaxialement et prolongeant l'un (8) des éléments de fibre, l'autre (9) élément de fibre étant libre en translation axiale dans le tube (13).
